## Europäisches Patentamt

## European Patent Office

## Office européen des brevets

(11) Veröffentlichungsnummer: **0 192 094**
**B1**

(12) **EUROPÄISCHE PATENTSCHRIFT**

(45) Veröffentlichungstag der Patentschrift:
**25.10.89**

(21) Anmeldenummer: **86101191.4**

(22) Anmeldetag: **30.01.86**

(51) Int. Cl.⁴: **F 16 B 7/10**

(54) Vorrichtung zur Ver- und Entriegelung von teleskopartig konzentrisch ineinander verschiebbaren rohrförmigen Elementen.

(30) Priorität: **09.02.85 DE 3504521**

(43) Veröffentlichungstag der Anmeldung:
**27.06.86 Patentblatt 86/35**

(45) Bekanntmachung des Hinweises auf die Patenterteilung:
**25.10.89 Patentblatt 89/43**

(84) Benannte Vertragsstaaten:
**GB NL**

(56) Entgegenhaltungen:
**EP-A-0 063 783**
**CH-A-58 534**
**DE-A-2 318 993**
**DE-A-2 603 488**
**FR-A-2 446 907**

(73) Patentinhaber: **DORNIER GMBH, Postfach 1420, D-7990 Friedrichshafen 1 (DE)**

(72) Erfinder: **Schmid, Manfred, Dipl.- Ing., Allgäuer Strasse 14, D-7990 Friedrichshafen 1 (DE)**
Erfinder: **Westphal, Manfred, Unterer Höhenweg 12, D-7775 Bermatingen (DE)**

(74) Vertreter: **Landsmann, Ralf, Dipl.- Ing., c/o DORNIER GMBH Postfach 1420, D-7990 Friedrichshafen 1 (DE)**

## Beschreibung

Die Erfindung betrifft eine Vorrichtung zur Ver- und Entriegelung von teleskopartig konzentrisch ineinander verschiebbaren rohrförmigen Elementen mit einem Spindeltrieb, durch den die Elemente nacheinander gegeneinander verschoben werden können und mit einer Verriegelung, die beim Verschieben eines Elements das folgende Element gegen vorzeitiges Mitverschieben sichert und die ein selbsttätiges Kuppeln des jeweils verschobenen Elements mit dem folgenden Element bewirkt und wobei die Verriegelung aus wenigstens einer federbelasteten mehrarmigen Sperrklinke besteht, welche im Endbereich eines jeden Elements schwenkbar gelagert ist, wobei mindestens ein Arm der Sperrklinke als Verriegelungsarm und mindestens ein Arm als Entriegelungsarm ausgebildet sind, denen im oberen Bereich des jeweils äußeren und im unteren Bereich des jeweils inneren Elements daran angeordnete Betätigungsnasen bzw. Verriegelungsnasen zugeordnet und derart ausgebildet sind, daß während einer Ein- und Ausfahrbewegung das Lösen und Einrasten bzw. Verriegeln der Sperrklinke jeweils durch das betätigte Element erfolgt. Eine solche Vorrichtung ist aus der EP-A-63 783 bekannt und bildet den Oberbegriff des Anspruchs 1.

Aus der CH-A-58 534 ist ein Teleskopmast mit ineinandergelagerten Rohren beliebigen Querschnitts bekannt. Dieser Mast ist gekennzeichnet durch die Verwendung eines Spindelantriebs, mit welchem die Teleskoprohre nacheinander in Eingriff kommen; ferner durch eine Verriegelungsvorrichtung, die beim Ausfahren des einen Rohres das nächstfolgende gegen vorzeitige Mitnahme sichert und durch eine weitere Verriegelungsvorrichtung, die das selbsttätige Verriegeln des ausgeschobenen, vom Spindelgetriebe freiwerdenden Rohres mit dem nächstfolgenden, unter den Einfluß des Spindeltriebs gekommenen Rohres bewirkt. Dadurch wird erreicht, dass die Länge der zum Ein- und Ausziehen des Teleskoprohres dienenden Spindel diejenige des zusammengeschobenen Teleskopsystems nur um ein Geringes zu übersteigen braucht.

Dieses bekannte Ein- und Ausfahrprinzip für Teleskopmasten ist zwar durch die einfache Konstruktion des Spindelvortriebes und des geringen Platzbedarfs einfach. Das System funktioniert aber nur, wenn die Bewegungen der einzelnen Rohre durch Anschläge und Verriegelungen genau koordiniert sind. Hierzu sind grundsätzlich je Teleskoprohr zwei Verriegelungen notwendig; eine, die ein vorzeitiges Mitnehmen des nächstfolgenden Rohres verhindert und eine zweite, die das bereits ausgefahrene Rohr zum nachfolgenden verriegelt. Für diese zweifach notwendige Verriegelung sind Lösungen bekannt und in der Praxis erprobt. Nachteilig ist aber bei all diesen Lösungen die zweifache Verriegelungsmechanik mit ihrer teilweise sehr komplizierten Funktionsweise vor allem bei Teleskopmasten mit einer höheren Anzahl von Einzelrohren. So würden z. B. die in der zitierten CH-A-58 534 vorgesehenen Verriegelungsbolzen sehr lang werden, wodurch die Funktionssicherheit beeinträchtigt wäre. Aber auch die darin beschriebene Lösung, die beiden Verriegelungsfunktionen in einer einzigen Verriegelungsvorrichtung vereinigt, das heißt, daß nur ein Querriegel je Winkelrohr vorhanden ist, hat jedoch, wie auch die mit zwei Verriegelungsbolzen, den Nachteil, daß durch die Höhe der Verriegelungsvorrichtung die nachfolgenden äußeren Rohre um den Betrag der Vorrichtungshöhe kürzer sind. Dadurch reduziert sich die Teleskop-Ausfahrlänge oder die Überlappungslänge der jeweiligen Einzelrohre. Ein weiterer Nachteil ist die bekannte schlechte Wirkungsweise eines Querriegels im Vergleich zu einer drehenden Verriegelung, die aufgrund des kleineren Lagers höhere Genauigkeit und geringere Reibkräfte aufweist und zudem auch platzsparender untergebracht werden kann.

Aufgrund dieser Nachteile ist auch diese Lösung, bei der beide Verriegelungsfunktionen zu einer vereinigt sind, trotz reduzierter Verriegelungszahl sehr aufwendig und, bedingt durch die hohe Reibung, recht unzuverlässig.

Aus der DE-A-2 318 993 ist ein teleskopierbarer Ausleger bekannt, bei dem keine besonderen Mittel zur Verriegelung vorgesehen sind.

Aus der DE-A-2 603 488 ist eine teleskopierbare, längenveränderliche Vorrichtung bekannt, deren Verriegelung der der EP-A-63 783 entspricht.

Aufgabe der Erfindung ist es, die aus der EP-A-63 783 bekannte Verriegelung so zu ändern, daß ein ungewolltes Lösen der Verriegelung verhindert wird. Außerdem sollte der Aufwand an Verriegelungsmechanik so klein wie möglich sein, ohne dass die Zuverlässigkeit des gesamten Teleskopsystems nachteilig beeinflusst wird.

Erfindungsgemäß sind zur Lösung der gestellten Aufgabe die kennzeichnenden Merkmale von Anspruch 1 vorgesehen. Vorteilhafte Ausgestaltungen ergeben sich aus den Unteransprüchen.

Der Vorteil der Erfindung besteht darin, dass für teleskopartig konzentrisch längenveränderliche Einrichtungen, wie z. B. ineinander verschiebbare rohrförmige Elemente, neben der für das Funktionieren der Längenveränderung notwendige sichere Aus- und Einfahrreihenfolge ein zuverlässiges Verriegeln der Elemente und eine platzsparende Unterbringung der Verriegelung innerhalb des Elementenpaketes ermöglicht wird. Dadurch enden die Elemente im oberen Bereich in gleicher Ebene bei gleichzeitig reduzierter Reibkraft, sowie des Aufwands an Halterungen. Hierbei ist gegenüber den bekannten Lösungen besonders vorteilhaft, dass neben einer sicheren Funktionsweise für das Ein- und Ausfahren der Rohre auch die Anzahl der mechanisch bewegten Teile und der Platzbedarf reduziert ist.

Die Sperrklinke ist hierbei als vierarmiger Winkelhebel ausgeführt, wobei je zwei Arme als Raste und je zwei Arme als Entriegelungsarm ausgebildet sind. Die Sperrklinke ist in ihrer jeweiligen Verriegelungslage durch eine Haltefeder gesichert. Dadurch ist ein ungewolltes oder selbständiges Lösen der Verriegelung nicht möglich.

Das Lösen und Einrasten der Sperrklinke erfolgt automatisch durch den Bewegungsablauf des jeweils betätigten Elementes, welches an den entsprechenden Stellen Aussparungen oder Betätigungsnasen aufweist. Der Vortrieb kann sowohl mit einer durch einen Motor oder von Hand angetriebenen Spindel, als auch mit einem hydraulischen Antriebsmittel erzeugt werden. Als Teleskopelement sind vorzugsweise konzentrisch ineinander verschiebbar angeordnete Rohre, aber auch Elemente z. B. in Form von Stäben, Bändern mit dazu geeigneten Führungen verwendbar.

Ausführungsbeispiele sind folgend beschrieben und durch Skizzen erläutert.

Es zeigen:

Figur 1 schematisiert und längsgeschnitten fünf teleskopartig konzentrisch längsverschiebbare rohrförmige Teleskopelemente,

Figuren 2a bis 2f die einzelnen Ablaufphasen der Ent- und Verriegelung beim Ausfahren der Teleskopelemente,

Figuren 3a bis 3f die einzelnen Ablaufphasen der Ent- und Verriegelung beim Einfahren der Teleskopelemente.

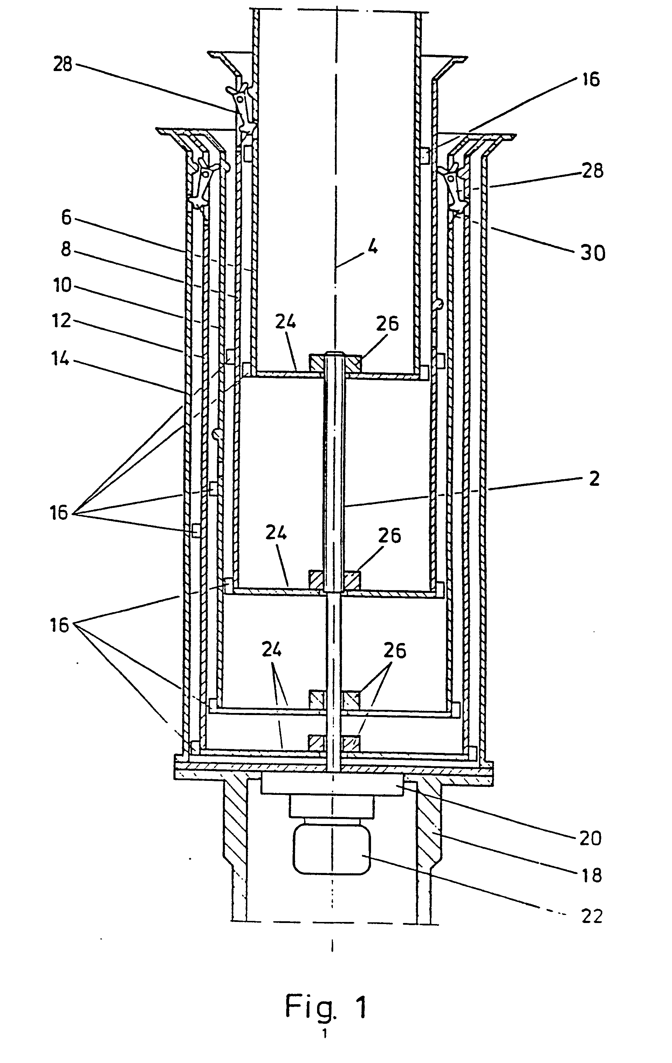

Bei dem aus Figur 1 ersichtlichen Ausführungsbeispiel handelt es sich um einen teleskopartig längsveränderlichen Mast mit einer Spindel 2 als Vorschubeinrichtung. Der Mast ist zusammengesetzt aus einer Anzahl von konzentrisch ineinander verschiebbar angeordneten und in ihrer Längsachse 4 gegeneinander verschiebbaren rohrförmigen Elementen 6, 8, 10, 12, 14 (im weiteren Rohre genannt). Die Rohre sind durch konzentrisch angeordnete Führungseinsätze 16 in Längsrichtung geführt. Dagegen ist eine Drehung der Rohre durch eine geeignete in der Figur nicht dargestellte Nut- und Federführung ausgeschlossen. Der Vorschub der Rohre erfolgt mittels der am oberen Ende freistehenden Spindel 2, welche zentriert innerhalb der Rohre angeordnet und auf einer feststehenden Konsole 18 drehbar gelagert ist. Das untere Ende der Spindel 2 ist unter Zwischenschaltung eines Untersetzungsgetriebes 20 an einen Antriebsmotor 22 angeschlossen, welcher in seiner Drehrichtung umschaltbar ausgelegt ist. An den Böden 24 der Rohre 6 bis 12 sind Muttern 26 angeordnet, die zum Gewinde der Spindel 2 passen. Bei eingefahrenen Rohren steht lediglich die Mutter 26 des Rohres 6 in Eingriff, während sich in dieser Stellung die Muttern 26 der Rohre 8, 10, 12 auf dem gewindefreien Teil der Spindel 2 befinden. Am oberen Ende der Rohre 8, 10, 12 ist eine Sperrklinke 28 mit einer Druckfeder 30 angeordnet, welche die Stellung der Rohre zueinander fixiert. Das Rohr 6 ist durch die auf dem Gewinde der Spindel 2 befindliche Mutter 26 gehalten.

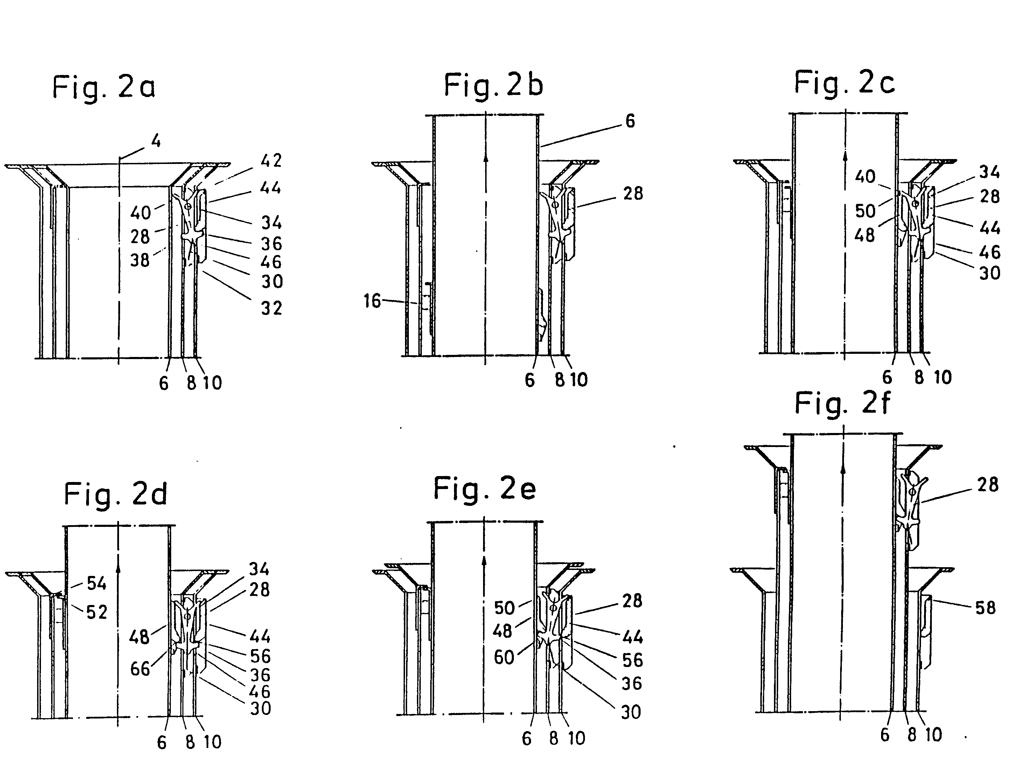

Aus den Figuren 2a bis 2f sind die Ablaufphasen für die Arbeitsweise während der Ent- und Verriegelung beim Ausfahren der Rohre 6, 8 und 10 ersichtlich. Im eingefahrenen Zustand sind die Rohre 8 und 10 mittels der Sperrklinke 28 verriegelt, welche durch die Druckfeder 30 in Sperrstellung gehalten wird (Figur 2a). Die Sperrklinke 28 ist als vierarmiger Winkelhebel ausgebildet und an einer im oberen Bereich des Rohres 8 befestigten Halterung 32 um einen Bolzen 34 schwenkbar angeordnet. Die beiden unteren Arme 36, 38 der Sperrklinke 28 sind als Rastarme und ihre beiden oberen Arme 40, 42 als Entriegelungsarme ausgebildet. Zur Aufnahme und Verriegelung des Rastarmes 36 ist am oberen Bereich des Rohres 10 ein Aufnahmebeschlag 44 mit einer Aussparung 46 vorgesehen.

Durch Betätigung des Motors 22 wird die Spindel 2 (Figur 1) gedreht und die mit ihr in Eingriff stehende Mutter 26 des Rohres 6 nach oben bewegt, so dass das Rohr 6 aus dem Rohrpaket 8, 10 herausgeschoben wird (Figur 2b). Eine vorzeitige Mitnahme von Rohr 8 infolge der Reibung zwischen den Rohren 6 und 8 wird durch die noch immer eingerastete Sperrklinke 28 verhindert.

Bevor die Mutter 26 des Rohres 6 die Spindel 2 verlässt, fährt eine im unteren Bereich des Rohres 6 auf einem Aufsatz 48 angeordnete Betätigungsnase 50 gegen den Entriegelungsarm 40 (Figur 2c), wodurch die Sperrklinke 28 um den Bolzen 34 entgegen der Druckfeder 30 gedreht wird und dabei aus der Aussparung 46 des Aufnahmebeschlages 44 herausgleitet und die Verriegelung von Rohr 8 und 10 löst (Figur 2d). Hierbei gelangt ein im unteren Bereich am Rohr 6 angeordneter Anschlag 52 gegen einen im oberen Bereich am Rohr 8 vorgesehenen Anschlag 54 und hebt das Rohr 8 an, so dass dessen Mutter 26 mit der Spindel 2 in Eingriff gelangt (Figur 1). Zugleich gleitet die Sperrklinke 28 mit dem Arm 36 über die Schulter 56 des Aufnahmebeschlages 44 in eine Aussparung 60 des Aufsatzes 48 (Figur 2e), um so die beiden Rohre 6 und 8 miteinander zu verriegeln. Dieser Vorgang wird durch die Druckfeder 30 unterstützt, die darüberhinaus die Sperrklinke 28 dann in der Verriegelungsstellung hält.

Infolge dieser Verriegelung wird das Rohr 6 durch das bei Weiterdrehen der Spindel 2 herausgeführte Rohr 8 zuverlässig mitgenommen (Figur 2f), auch dann, wenn die Mutter 26 des Rohres 6 die Spindel 2 verlässt.

Der Vorgang wiederholt sich beim Herausführen eines jeden ausschiebbaren Rohres. Bei vollständig ausgefahrenem Mast wird das letzte ausschiebbare Rohr 12 mittels der sich noch auf der Spindel 2 befindlichen Mutter 26 in Position gehalten.

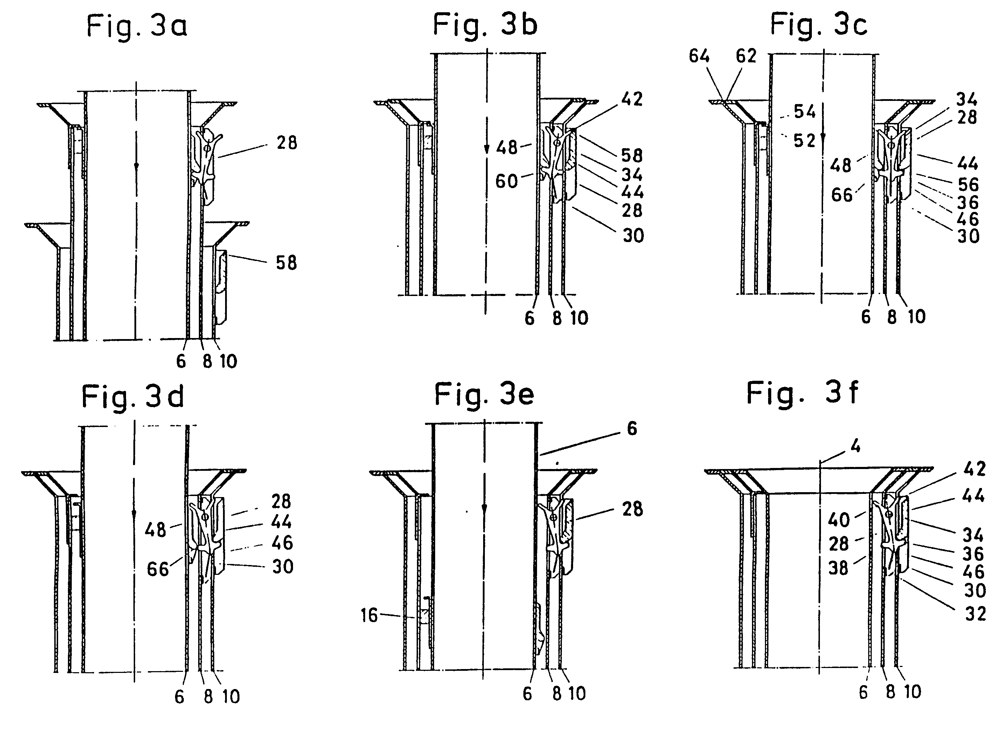

Die Figuren 3a bis 3f zeigen die Ablaufphasen für die Arbeitsweise bei der Ent- und Verriegelung der Teleskoprohre während des Einfahrens. Hierbei Entriegeln und Verriegeln die Sperrklinke 28 in umgekehrter Reihenfolge. Bei der dazu notwendigen Umkehr der Drehrichtung der Spindel 2 werden die Rohre 6 und 8 nach unten bewegt. Kurz nachdem die Mutter 26 des Rohres 6 auf die Spindel 2 läuft und die Mutter 26 des Rohres 8 verlassen hat (Figur 1), wird der Entriegelungsarm 42 gegen die Betätigungsnase 58 des Aufnahmebeschlages 44 gedrückt (Figur 3b), wodurch sich die Sperrklinke 28 um den Bolzen 34 entgegen der Druckfeder 30 dreht und dabei aus der Aussparung 60 des Aufsatzes 48 herausgleitet und die Verriegelung von Rohr 6 und 8 löst. Hierbei gelangt der Anschlag 62 von Rohr 8 gegen den Anschlag 64 von Rohr 10, wodurch die Verschiebung von Rohr 8 gestoppt wird (Figur 3c). Durch das weiter einfahrende Rohr 6 wird die Sperrklinke 28 über die Schulter 66 des Aufsatzes 48 in die Aussparung 46 des Aufnahmebeschlages 44 gedrückt, womit die beiden Rohre 8 und 10 verriegeln. Dieser Vorgang wird durch die Druckfeder 30 unterstützt, welche die Sperrklinke 28 in der verriegelten Stellung sichert (Figur 3d). Durch Weiterdrehen der Spindel 2 und der folgenden Entriegelung kann das Rohr 6 ganz eingefahren werden (Figuren 3e und 3f).

**Patentansprüche**

1. Vorrichtung zur Ver- und Entriegelung von teleskopartig konzentrisch ineinander verschiebbaren rohrförmigen Elementen mit einem Spindelantrieb, durch den die Elemente nacheinander gegeneinander verschoben werden können und mit einer Verriegelung, die beim Verschieben eines Elements das folgende Element gegen vorzeitiges Mitverschieben sichert und die ein selbsttätiges Kuppeln des jeweils verschobenen Elements mit dem folgenden Element bewirkt und wobei die Verriegelung aus wenigstens einer federbelasteten mehrarmigen Sperrklinke besteht, welche im Endbereich eines jeden Elements schwenkbar gelagert ist, wobei mindestens ein Arm der Sperrklinke als Verriegelungsarm und mindestens ein Arm als Entriegelungsarm ausgebildet sind, denen im oberen Bereich des jeweils äußeren und im unteren Bereich des jeweils inneren Elements daran angeordnete Betätigungsnasen bzw. Verriegelungsnasen zugeordnet und derart ausgebildet sind, daß während einer Ein- und Ausfahrbewegung das Lösen und Einrasten bzw. Verriegeln der Sperrklinke jeweils durch das betätigte Element erfolgt, dadurch gekennzeichnet, daß die Sperrklinke (28) als einteiliger vierarmiger und um einen an einer im oberen Bereich der Elemente (8, 12) befestigten Halterung (32) angeordneten Bolzen (34) schwenkbarer Winkelhebel ausgebildet ist, bei dem zwei Arme (36, 38) als Raste und zwei Arme (40, 42) als Entriegelungsarme dienen, und daß an den Elementen (6, 8, 10, 12, 14) Aufnahmebeschläge (44) und Aufsätze (48) mit Aussparungen (46, 60) und Betätigungsnasen (50, 58) vorgesehen sind, die mit den vier Armen (36, 38, 40, 42) zusammenwirken.

2. Vorrichtung nach Anspruch 1, dadurch gekennzeichnet, daß die Sperrklinke (28) mit der Halterung (32) durch eine Druckfeder (30) verbunden ist.

3. Vorrichtung nach Anspruch 1, dadurch gekennzeichnet, daß die Elemente (6, 8, 10, 12) am unteren Ende außen Führungseinsätze aufweisen.

4. Vorrichtung nach einem der Ansprüche 1 bis 3, dadurch gekennzeichnet, daß die Elemente (6, 8, 10, 12) durch eine Nut- und Federführung gesichert sind.

5. Vorrichtung nach einem der Ansprüche 1 bis 4, dadurch gekennzeichnet, daß die Elemente (6, 8, 10, 12) mit einem im unteren und oberen Bereich angeordneten Anschlag (52, 54) versehen sind.

6. Vorrichtung nach den Ansprüchen 1 bis 4, dadurch gekennzeichnet, daß die Spindel (2) innerhalb der Elemente (6, 8, 10, 12, 14) angeordnet und auf einer feststehenden Konsole (18) drehbar gelagert ist.

7. Vorrichtung nach den Ansprüchen 1 bis 6, dadurch gekennzeichnet, daß die Spindel (2) unter Zwischenschaltung eines Untersetzungsgetriebes (2) mit einem in seiner Drehrichtung umschaltbaren Antriebsmotor (22) verbunden ist.

8. Vorrichtung nach den Ansprüchen 1 bis 7, dadurch gekennzeichnet, daß die Elemente (6, 8, 10, 12) am unteren Ende eine mit der Spindel (2) im Eingriff stehende Mutter (26) aufweisen.

**Claims**

1. Device for locking and unlocking telescopic tubular elements which can be slid concentrically into each other, with a spindle drive with which the elements can be displaced against one another in succession, and with a locking device which on the displaced of one element, protects the following element against premature displacement with it and which causes an automatic coupling of each displaced element with the following element, and wherein the locking mechanism comprises at least one springloaded multiple-arm catch, which is hinged in the end region of each element, wherein at least one arm of the catch is formed as a locking arm and at least one arm is formed as an unlocking arm, to which arms there are assigned in the upper area of each outer and in the lower area of each inner element actuating and/or locking projections arranged thereon, which arms are formed in such a way that during an extension and retraction movement, the catch is released and engaged and/or locked by the actuated element, characterised in that the catch (28) is formed as a single, four-arm angle lever which can be swivelled on a pin (34) arranged on a mounting (32) secured in the upper area of the elements (8, 12), in which two arms (36, 38) are used as locking and two arms (40, 42) as unlocking arms, and in that on the elements (6, 8, 10, 12, 14) engagement mountings (44) and fixtures (48) are provided with openings (46, 60) and actuating projections (50, 58) which co-operate with the four arms (36, 38, 40, 42).

2. Device according to claim 1, characterised in that the catch (28) is connected to the mounting (32) by means of a pressure spring (30).

3. Device according to claim 1, characterised in that the elements (6, 8, 10, 12) have outer guide inserts on the lower end.

4. Device according to any one of claims 1 to 3, characterised in that the elements (6, 8, 10, 12) are secured by a groove and tongue guide.

5. Device according to any one of claims 1 to 4, characterised in that the elements (6, 8, 10, 12) are provided with a stop (52, 54) arranged in the lower and upper region.

6. Device according to claims 1 to 4, characterised in that the spindle (2) is arranged inside the elements (6, 8, 10, 12, 14) and is pivoted on a stationary bracket (18).

7. Device according to claims 1 to 6, characterised in that the spindle (2) is connected to a driving motor (22) which can be reversed in its direction of rotation through the intermediary of a reduction gear.

8. Device according to claims 1 to 7, characterised in that the elements (6, 8, 10, 12) have on their lower ends a nut (26) in engagement with the spindle (2).

**Revendications**

1. Dispositif pour le verrouillage et le déverrouillage d'éléments tubulaires coulissant de manière télescopique et concentrique les uns dans les autres avec une commande à broche par laquelle les éléments peuvent être déplacés successivement les uns par rapport aux autres, et avec un système de verrouillage qui, lors du déplacement de l'un des éléments, empêche l'entraînement prématuré de l'élément suivant et provoque un couplage automatique de l'élément respectivement déplacé avec l'élément suivant, le système de verrouillage se composant d'au moins un cliquet d'arrêt à plusieurs bras commandé par ressort et monté de manière pivotante dans la section terminale de chaque élément, au moins un bras du cliquet d'arrêt étant conformé en bras de verrouillage et au moins un bras, en bras de déverrouillage auxquels sont associés, dans la région supérieure de l'élément respectivement extérieur et dans la région inférieure de l'élément respectivement intérieur, des taquets de manoeuvre et respectivement des taquets de verrouillage montés sur lesdits éléments et conformés de telle façon que, lors d'un mouvement de rentrée et de sortie, la libération et le blocage et respectivement le verrouillage du cliquet d'arrêt sont réalisés respectivement par l'élément actionné, _caractérisé en ce_ que le cliquet d'arrêt (28) est réalisé sous la forme d'un levier coudé à quatre bras d'une seule pièce lequel peut pivoter autour d'un axe (34) placé sur un support (32) monté dans la région supérieure des éléments (8, 12), dont deux bras (36, 38) servent de taquets d'enclenchement et deux bras (40, 42), de bras de déverrouillage, et que sur les éléments (6, 8, 10, 12, 14) sont prévus des ferrures de réception (44) et des garnitures (48) avec des évidements (46, 60) et des taquets de manoeuvre (50, 58) qui coopèrent avec les quatre bras (36, 38, 40, 42).

2. Dispositif selon la revendication 1, caractérisé en ce que le cliquet d'arrêt (28) est lié au support (32) par un ressort de compression (30).

3. Dispositif selon la revendication 1, caractérisé en ce que les éléments (6, 8, 10, 12) comportent à l'extrémité inférieure, à l'extérieur, des inserts de guidage.

4. Dispositif selon l'une des revendications 1 à 3, caractérisé en ce que les éléments (6, 8, 10, 12) sont bloqués par un guidage à languette et rainure.

5. Dispositif selon l'une des revendications 1 à 4, caractérisé en ce que les éléments (6, 8, 10, 12) sont munis d'une butée (52, 54) disposée dans les régions inférieure et supérieure.

6. Dispositif selon l'une des revendications 1 à 4, caractérisé en ce que la broche (2) est montée à l'intérieur des éléments (6, 8, 10, 12, 14) et fixée de manière tournante sur une console fixe (18).

7. Dispositif selon l'une des revendications 1 à 6, caractérisé en ce que la broche (2) est raccordée, avec interposition d'un démultiplicateur (20), à un moteur d'entraînement (22) dont le sens de rotation est commutable.

8. Dispositif selon l'une des revendications 1 à 7, caractérisé en ce que les éléments (6, 8, 10, 12) présentent à l'extrémité inférieure un écrou (26) coopérant avec la broche (2).

Fig. 1

Fig. 2a

Fig. 2b

Fig. 2c

Fig. 2d

Fig. 2e

Fig. 2f

EP 0 192 094 B1

3

Fig. 3a

Fig. 3b

Fig. 3c

Fig. 3d

Fig. 3e

Fig. 3f

EP 0 192 094 B1